# EUROPEAN PATENT SPECIFICATION

(11) **EP 3 480 134 B1**
(45) Date of publication and mention of the grant of the patent: **14.08.2024**
(21) Application number: 17819613.5
(22) Date of filing: 19.04.2017
(51) Int. Cl.: A23B 7/04, B65D 85/34, C08L 1/12, C08L 1/10, C08L 33/02, C08L 33/12, B65D 85/50

(54) **FRUIT AND VEGETABLE PACKAGING MATERIAL**
OBST- UND GEMÜSEVERPACKUNGSMATERIAL
MATÉRIAU D'EMBALLAGE POUR FRUITS ET LÉGUMES

(30) Priority: 29.06.2016 JP 2016128427
(43) Date of publication of application: 08.05.2019
(73) Proprietor: FUJIFILM Corporation, Tokyo 106-8620 (JP)
(72) Inventor: IKEYAMA, Akihiro, Minami-ashigara-shi Kanagawa 250-0193 (JP); WASHIYA, Kimito, Minami-ashigara-shi Kanagawa 250-0193 (JP)
(74) Representative: Hoffmann Eitle
(86) International application number: PCT/JP2017/015701
(87) International publication number: WO 2018/003246

(56) References cited:
- EP-A1- 0 703 945
- EP-B1- 0 703 945
- JP-A- 2003 169 598
- JP-A- 2016 037 312
- JP-A- 2016 074 795
- JP-A- 2016 185 116
- JP-A- H09 252 718
- US-A1- 2001 014 388
- US-A1- 2014 199 502
- VU THANH PHUONG ET AL: "Cellulose Acetate Blends - Effect of Plasticizers on Properties and Biodegradability", JOURNAL OF RENEWABLE MATERIALS, vol. 2, no. 1, 1 March 2014 (2014-03-01), US, pages 35 - 41, XP055562731, ISSN: 2164-6325, DOI: 10.7569/JRM.2013.634136

## Description

### BACKGROUND OF THE INVENTION

### 1. Field of the Invention

The present invention relates to a packaging material for fruits and vegetables.

### 2. Description of the Related Art

Anti-fog packaging using packaging materials with so-called anti-fogging properties, which suppress fogging by preventing condensation, modified atmosphere (MA) packaging which adjusts the concentrations of oxygen (O₂) and carbon dioxide (CO₂) in order to control respiration, and the like have been known as packaging for fruits and vegetables.

For example, a packaging bag for fruits and vegetables has been proposed, which is formed of a synthetic resin film, and in which the water vapor permeability of the synthetic resin film at 40°C and 90% RH (relative humidity: 90%) is 40 g/m² · day or greater and 90 g/m² · day or less, and the contact angle of water on a surface which is on the fruit and vegetable side in a case where fruits and vegetables are packaged is greater than 0° and less than 60° (for example, see JP2014-024597A). A single layer body or a multilayer body including an ethylene vinyl alcohol copolymer film is described as the synthetic resin film, and the ethylene vinyl alcohol copolymer contains a surfactant. As a result, fogging is suppressed in the bag by suppressing condensation even in a sealed state.

In view of controlling respiration, a packaging material for fruits and vegetables in which fine pores are formed in a multilayer film formed of a heat-fusible resin containing an anti-fogging agent in the innermost layer has been proposed (for example, see JP1997-252718A (JP-H09-252718A)). The innermost layer is formed from, for example, polyolefin to which an anti-fogging agent is added, thereby providing anti-fogging properties. In addition, the fine pores have a diameter of several micrometers to several tens of micrometers, and thus the oxygen permeability is adjusted, and respiration is controlled.

Packaging materials for fresh foods containing cellulose ester acylate (cellulose ester) such as cellulose acetate have also been proposed (for example, see JP2004-509204A (corresponding to US2004/0014883A1), JP2014-534128A (corresponding to US2014/0251858A1), and JP2003-169598A). EP 0 703 945 A1 relates to a blend comprising (a) 2 % to 98 % by weight of at least one ester of cellulose comprising an alkanoyl chain having from 1 to 10 carbon atoms, and having a D.S. of 2.3 to 3.0, and an inherent viscosity of 0.2 to 3.0 deciliters/gram as measured at a temperature of 25°C for a 0.5 g sample in 100 ml of a 60/40 parts by weight solution of phenol/tetrachloroethane, and (b) 98 % to 2 % by weight of at least one ester of cellulose comprising an alkanoyl chain having from 1 to 10 carbon atoms, and having a D.S. of 1.5 to 2.2, and an inherent viscosity of 0.2 to 3.0 deciliters/gram as measured at a temperature of 25°C for a 0.5 g sample in 100 ml of a 60/40 parts by weight solution of phenol/tetrachloroethane, said percentages being based on the weight of component (a) plus component (b). Vu Thanh Phuong et al., Journal of Renewable Materials, vol. 2, no. 1, March 2014, p. 35-41 relates to cellulose acetate blends and the effect of plasticizers on their properties and biodegradability. JP 2016 074795 A relates to a resin composition containing (A) a cellulose ester resin, (B) an epoxy group-containing plasticizer of 5 pts.mass to 10 pts.mass based on 100 pts.mass of the (A) cellulose ester resin and (C) a non-reactive plasticizer having no functional group reactive with the (A) cellulose ester resin of 10 pts.mass to 30 pts.mass based on 100 pts.mass of the (A) cellulose ester resin.

US 2001 014388 A1 relates to partly-finished products such as sheets, which are particularly suitable for use in the food packaging sector and in particular as trays for food with a lifetime of the order of 30 days, for the packaging of meat, milk products, vegetables, eggs and fruit. The products are obtained by extrusion of starting compositions containing a starchy material, water and possibly a thermoplastic polymer and further additives such as plasticizers. The thermoplastic polymer can be cellulose acetate, cellulose propionate, cellulose butyrate and their co-polymers, with a degree of substitution between 1 and 2.5.

### SUMMARY OF THE INVENTION

However, according to the methods described in JP2014-024597A, JP1997-252718A (JP-H09-252718A), JP2004-509204A, JP2014-534128A, and JP2003-169598A, condensation still occurs in a case where fruits and vegetables which release a large amount of moisture are packaged and/or refrigerated for a long period of time. Since condensation is a cause of mold growth, further improvement is required in the condensation prevention effect, and this is particularly highly demanded in refrigerated storage. It is also desirable to suppress discoloration of fruits and vegetables.

An object of the invention is to provide a packaging material for fruits and vegetables which further improves the effect of suppressing condensation and suppresses discoloration of fruits and vegetables.

In order to solve the problems, the packaging material for fruits and vegetables according to the invention comprises: cellulose acylate, and at least one of an acrylic polymer, an ester oligomer, an ester derivative of a monosaccharide, or an ester derivative selected from an ester derivative of lactose, sucrose, nystose, 1F-fructosyl nystose, stachyose, maltitol, lactitol, lactulose, cellobiose, maltose, cellotriose, maltotriose, raffinose, kestose, gentiobiose, gentiotriose, gentiotetraose, xylotriose, galactosyl sucrose, maltooligosaccharide, isomalto-oligosaccharide, fructo-oligosaccharide, galacto-oligosaccharide, and xylo-oligosaccharide, wherein the cellulose acylate has an acyl group substitution degree within a range of 2.70 to 2.97, and wherein the ester oligomer is an aliphatic ester oligomer having a molecular weight within a range of from 500 to 10,000.

In the packaging material for fruits and vegetables according to the invention, the cellulose acylate preferably has an acetyl group.

A difference between an equilibrium moisture content at 25°C and a relative humidity of 80% and an equilibrium moisture content at 25°C and a relative humidity of 55% is preferably within a range of 0.5% to 3.5%. An equilibrium moisture content at 25°C and a relative humidity of 55% is preferably within a range of 1% to 4%.

In the packaging material for fruits and vegetables according to the invention, the sum of masses of the ester oligomer, the ester derivative of a monosaccharide, and the ester derivative selected from an ester derivative of lactose, sucrose, nystose, 1F-fructosyl nystose, stachyose, maltitol, lactitol, lactulose, cellobiose, maltose, cellotriose, maltotriose, raffinose, kestose, gentiobiose, gentiotriose, gentiotetraose, xylotriose, galactosyl sucrose, maltooligosaccharide, isomalto-oligosaccharide, fructo-oligosaccharide, galacto-oligosaccharide, and xylo-oligosaccharide is preferably within a range of 5 to 30 under the assumption that the mass of the cellulose acylate is 100.

According to the present disclosure, the effect of suppressing condensation is improved, and discoloration of fruits and vegetables is suppressed.

### BRIEF DESCRIPTION OF THE DRAWINGS

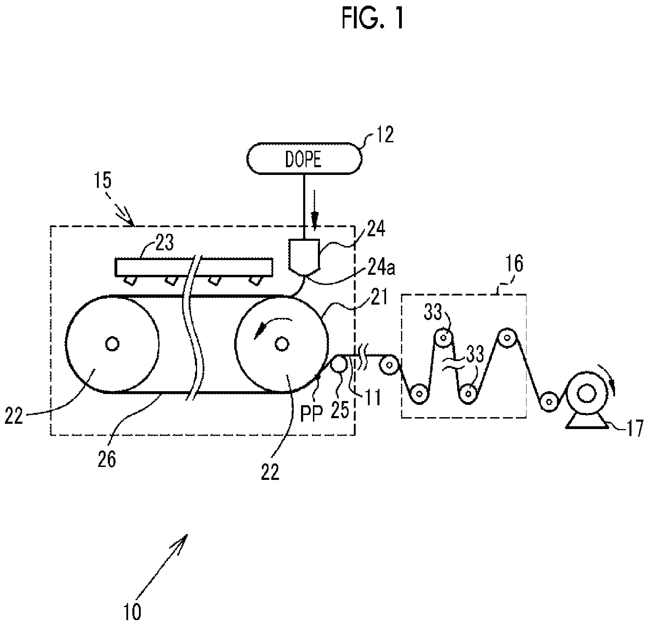

Fig. 1 is a schematic diagram of a packaging material manufacturing machine.

### DESCRIPTION OF THE PREFERRED EMBODIMENTS

A packaging material manufacturing machine 10 shown in Fig. 1 forms a packaging material 11 for fruits and vegetables according to the embodiment of the invention, that is, a material for packaging fruits and vegetables into a film shape. In this example, the packaging material 11 for fruits and vegetables has a single layer structure, and is manufactured in a long length by the packaging material manufacturing machine 10. However, the shape of the packaging material for fruits and vegetables is not limited to the long shape, and may have a sheet shape such as a rectangular shape.

The packaging material 11 for fruits and vegetables can be used for both sealing packaging and unsealing packaging. However, an improvement in the effect of suppressing condensation, the effect of suppressing discoloration of fruits and vegetables, and the mold suppression effect are more remarkably confirmed in a case where the packaging material for fruits and vegetables is provided for sealing packaging. The suppression of mold refers to the suppression of the generation and growth of mold. In addition, sealing packaging is more preferable than unsealing packaging from the viewpoint of suppressing contamination of fruits and vegetables by germs and dirt, and drying of fruits and vegetables. In this embodiment, a long-length packaging material 11 for fruits and vegetables is cut into a rectangular sheet shape and folded at the center of a long side, and two sides of edge portions are closed by heat sealing (heat welding) to produce a packaging bag for fruits and vegetables (not shown). The packaging material 11 for fruits and vegetables is provided for sealing packaging in which fruits and vegetables are put into the packaging bag for fruits and vegetables, and an edge portion of the remaining one side which is opened is closed by an adhesive tape, that is, sealed. However, the aspect of the sealing packaging is not limited thereto. Unsealing packaging includes so-called handkerchief packaging in which objects are placed on a packaging material having a rectangular sheet shape, and four corner ends are twisted together at the top as if the objects are wrapped with a handkerchief. The unsealing packaging also includes packaging using a packaging material for fruits and vegetables having a plurality of fine pores penetrating in a thickness direction. The formation of the packaging bag for fruits and vegetables is not limited to the formation by heat sealing, and the packaging bag may be formed using an adhesive or a pressure sensitive adhesive.

Cellulose acylate has an acyl group since the hydroxy group of cellulose is esterified with a carboxylic acid. The packaging material 11 for fruits and vegetables contains cellulose acylate, and the acyl group substitution degree of the cellulose acylate contained in the packaging material 11 for fruits and vegetables is within a range of 2.70 to 2.97. Accordingly, the equilibrium moisture content of the packaging material 11 for fruits and vegetables increases due to an increase in humidity inside the packaging material 11 for fruits and vegetables caused by the moisture released from fruits and vegetables. Due to the increase in equilibrium moisture content, the packaging material 11 for fruits and vegetables absorbs the moisture. Due to the absorption of the moisture by the packaging material 11 for fruits and vegetables, the humidity inside the packaging material 11 for fruits and vegetables (the internal space wrapped with the packaging material 11 for fruits and vegetables) is reduced, and thus the packaging material 11 for fruits and vegetables has a reduced equilibrium moisture content, and releases the moisture. In addition, in a case where the acyl group substitution degree is within the above range, deformation due to the absorption of water by the packaging material 11 for fruits and vegetables due to an increase in humidity inside the packaging material 11 for fruits and vegetables is suppressed. In a case where the equilibrium moisture content is adjusted such that the cellulose acylate contained in the packaging material 11 for fruits and vegetables has appropriate moisture absorption and release properties, even in a case where the fruits and vegetables are packaged in a sealed state, the packaging material 11 for fruits and vegetables suppresses the occurrence of condensation on an inner surface, which is a surface of the packaging material 11 for fruits and vegetables on the fruit and vegetable side, in a state in which the interior of the packaging material 11 for fruits and vegetables is maintained at such an appropriately high humidity that drying of the fruits and vegetables is suppressed. Furthermore, even in a case where the external temperature and/or humidity change, the change in the humidity inside the packaging material 11 for fruits and vegetables is kept smaller than the external change. Moreover, the effect of suppressing the occurrence of condensation is obtained even during refrigerated storage, and is continued for a long period of time, e.g., 14 days. As a result, the generation and growth of mold are suppressed, and the fruits and vegetables are stored in a fresh state for a long period of time. In addition, discoloration of the fruits and vegetables is suppressed since the fruits and vegetables are in an environment maintained at an appropriately high humidity, and condensation is suppressed as described above. The lower the acyl group substitution degree, the larger the amount of moisture absorbed by the packaging material 11 for fruits and vegetables, so that deformation by water absorption is likely to occur. Therefore, the acyl group substitution degree of the cellulose acylate constituting the packaging material 11 for fruits and vegetables is adjusted to 2.70 or higher. In theory, the upper limit of the acyl group substitution degree is 3.00. However, cellulose acylate having an acyl group substitution degree which is higher than 2.97 is not easily synthesized. Accordingly, the acyl group substitution degree of the cellulose acylate constituting the packaging material 11 for fruits and vegetables is adjusted within a range of 2.70 to 2.97.

The acyl group substitution degree of the cellulose acylate contained in the packaging material 11 for fruits and vegetables is more preferably within a range of 2.70 to 2.95. As is well known, the acyl group substitution degree is a rate of esterification of the hydroxy group of cellulose with a carboxylic acid, that is, the degree of substitution of an acyl group.

The acyl group of the cellulose acylate constituting the packaging material 11 for fruits and vegetables is not particularly limited, and may be an acetyl group having 1 carbon atom, or an acyl group having 2 or more carbon atoms. The acyl group having 2 or more carbon atoms may be an aliphatic group or an aryl group, and examples thereof include an alkylcarbonyl ester, an alkenylcarbonyl ester, an aromatic carbonyl ester, or an aromatic alkylcarbonyl ester of cellulose, and each of them may further have a substituted group. Examples thereof include a propionyl group, a butanoyl group, a pentanoyl group, a hexanoyl group, an octanoyl group, a decanoyl group, a dodecanoyl group, a tridecanoyl group, a tetradecanoyl group, a hexadecanoyl group, an octadecanoyl group, an iso-butanoyl group, a t-butanoyl group, a cyclohexanecarbonyl group, an oleoyl group, a benzoyl group, a naphthylcarbonyl group, and a cinnamoyl group.

The cellulose acylate constituting the packaging material 11 for fruits and vegetables may have only one kind of acyl group or two or more kinds of acyl groups, and at least one kind is preferably an acetyl group. In a case where the cellulose acylate has an acetyl group, the packaging material 11 for fruits and vegetables easily absorbs moisture, and thus the effect of suppressing condensation or the like is improved. Most preferable is cellulose acylate in which all acyl groups are acetyl groups. That is, the cellulose acylate is more preferably cellulose acetate.

The acyl group substitution degree can be obtained by a conventional method. For example, an acetylation degree (acetyl group substitution degree) is obtained through measurement and calculation of an acetylation degree according to ASTM: D-817-91 (method of testing cellulose acetate, etc.) which is a standard of ASTM International (former name: American Society for Testing and Materials). In addition, a distribution of an acylation degree (acyl group substitution degree) can be measured by high-performance liquid chromatography. As an example of this method, in the measurement of an acetylation degree of cellulose acetate, a sample is dissolved in methylene chloride, and using a column Nova-Pak (registered trademark) phenyl (manufactured by Waters Corporation), a distribution of an acetylation degree is measured by a linear gradient from a mixed liquid (mass ratio of methanol:water is 8:1) of methanol and water which is an eluant to a mixed liquid (mass ratio of dichloromethane:methanol is 9:1) of dichloromethane and methanol, and compared with a calibration curve obtained from a standard sample having a different acetylation degree. These measurement methods can be obtained with reference to methods described in JP2003-201301A. Regarding the measurement of an acetylation degree of cellulose acylate, in a case where the acetylation degree of cellulose acylate is obtained from the packaging material 11 for fruits and vegetables, high-performance liquid chromatography is preferably performed due to an additive contained in the packaging material for fruits and vegetables.

Here, an equilibrium moisture content (unit: %) at 25°C and a relative humidity of 80% (hereinafter, "relative humidity of X%" is referred to as "X% RH". RH is an abbreviation for relative humidity) is referred to as a first equilibrium moisture content W1, an equilibrium moisture content (unit: %) at 25°C and 55% RH is referred to as a second equilibrium moisture content W2, and a difference |W1-W2| (unit: %) between the first equilibrium moisture content W1 and the second equilibrium moisture content W2 is referred to as an equilibrium moisture content difference WD. In the packaging material 11 for fruits and vegetables, the equilibrium moisture content difference WD is preferably within a range of 0.5% to 3.5%. In a case where the equilibrium moisture content difference WD is 0.5% or greater, condensation is suppressed more than in a case where the equilibrium moisture content difference WD is less than 0.5%. In a case where the equilibrium moisture content difference WD is 3.5% or less, the humidity inside the packaging material 11 for fruits and vegetables is kept higher than in a case where the equilibrium moisture content difference WD is greater than 3.5%. As described above, the first equilibrium moisture content W1 and the second equilibrium moisture content W2 are equilibrium moisture contents at a temperature of 25°C, and this is because the room temperature level is assumed. However, it is confirmed that each of the first equilibrium moisture content W1 and the second equilibrium moisture content W2 of the packaging material 11 for fruits and vegetables is not significantly changed by temperature change. In addition, the first equilibrium moisture content W1 is an equilibrium moisture content at 80% RH, and this is because a humidity that is desirable for suppressing condensation is assumed. The second equilibrium moisture content W2 is an equilibrium moisture content at 55% RH, and this is because a humidity that is desirable for preventing drying of the fruits and vegetables is assumed.

In order to reduce the equilibrium moisture content difference WD, the acyl group substitution degree may be increased, or an additive may be added to the cellulose acylate to increase the amount of the additive added. In order to increase the equilibrium moisture content difference WD, the acyl group substitution degree may be reduced, or the amount of an additive to be added to the cellulose acylate may be reduced. The equilibrium moisture content difference WD of the packaging material 11 for fruits and vegetables is more preferably within a range of 0.7% to 2.6%, and even more preferably within a range of 0.9% to 2.0%.

In the packaging material 11 for fruits and vegetables, the second equilibrium moisture content W2 is preferably within a range of 1% to 4%. In a case where the second equilibrium moisture content W2 is 1% or greater, absorption and release of moisture is more securely controlled than in a case where the second equilibrium moisture content W2 is less than 1%. In a case where the second equilibrium moisture content W2 is 4% or less, the amount of water absorbed is suppressed to be smaller than in a case where the second equilibrium moisture content W2 is greater than 4%. As a result, for example, in a case where a packaging bag is formed using the packaging material 11 for fruits and vegetables, and fruits and vegetables are put into the packaging bag and stored therein, deformation and/or wrinkles are suppressed such that the elongation of the bag is reduced.

Using a commercially available moisture meter, the first equilibrium moisture content W1 can be obtained at 25°C and 80% RH, and the second equilibrium moisture content W2 can be obtained at 25°C and 55% RH after the packaging material 11 for fruits and vegetables is sufficiently humidity-controlled. The equilibrium moisture content difference WD can be calculated from the first equilibrium moisture content W1 and the second equilibrium moisture content W2 obtained. In this embodiment, in order to measure the first equilibrium moisture content W1, the packaging material 11 for fruits and vegetables is humidity-controlled for 24 hours under the condition of 25°C and 80% RH, and then 500 mg of a sample is obtained from the packaging material 11 for fruits and vegetables, and used for measurement using a Karl Fischer moisture meter (AQ-2200) manufactured by HIRANUMA SANGYO Co., Ltd. In order to measure the second equilibrium moisture content W2, the packaging material 11 for fruits and vegetables is humidity-controlled for 24 hours under the condition of 25°C and 55% RH, and then sampling and measurement are performed in the same manner as in the measurement of the first equilibrium moisture content W1. The equilibrium moisture content difference WD is calculated from the first equilibrium moisture content W1 and the second equilibrium moisture content W2 measured by the above-described method.

To cellulose acylate having an acyl group substitution degree within the above range, a plasticizer is preferably added in order to form a film-like packaging material 11 for fruits and vegetables. Various known plasticizers can be used as the plasticizer for the cellulose acylate. In a case where a plasticizer is used, condensation is also suppressed, and discoloration of fruits and vegetables is also securely suppressed. For example, it is confirmed in a case where a packaging bag is formed using a packaging material 11 for fruits and vegetables containing triphenyl acetate (TPP) and biphenyl diphenyl phosphate (BDP) together with cellulose acylate having an acyl group substitution degree within the above range, and fruits and vegetables are put into the packaging bag, sealed, and refrigerated for 14 days while being kept at 5°C, only slight condensation is confirmed on an inner wall of the packaging bag, and thus although fogging slightly occurs inside the packaging bag, the fruits and vegetables are hardly discolored, and the fresh state is maintained. In this manner, various plasticizers are used from the viewpoint of suppression of condensation and discoloration of fruits and vegetables. In view of the fact that the objects to be stored are fruits and vegetables, various known plasticizers may be used as long as the safety is confirmed.

The packaging material 11 for fruits and vegetables according to the present invention contains at least one of an acrylic polymer, an aliphatic ester oligomer having a molecular weight within a range of from 500 to 10,000, an ester derivative of a monosaccharide, or an ester derivative selected from an ester derivative of lactose, sucrose, nystose, 1F-fructosyl nystose, stachyose, maltitol, lactitol, lactulose, cellobiose, maltose, cellotriose, maltotriose, raffinose, kestose, gentiobiose, gentiotriose, gentiotetraose, xylotriose, galactosyl sucrose, maltooligosaccharide, isomalto-oligosaccharide, fructo-oligosaccharide, galacto-oligosaccharide, and xylo-oligosaccharide, in addition to the cellulose acylate having an acyl group substitution degree within the above range. The ester derivative of sugar and the ester oligomer function as a plasticizer of the cellulose acylate having an acyl group substitution degree within the above range.

The ester derivative of sugar may be either an ester derivative of a monosaccharide or an ester derivative selected from an ester derivative of lactose, sucrose, nystose, 1F-fructosyl nystose, stachyose, maltitol, lactitol, lactulose, cellobiose, maltose, cellotriose, maltotriose, raffinose, kestose, gentiobiose, gentiotriose, gentiotetraose, xylotriose, galactosyl sucrose, maltooligosaccharide, isomalto-oligosaccharide, fructo-oligosaccharide, galacto-oligosaccharide, and xylo-oligosaccharide, and the packaging material 11 for fruits and vegetables may contain both of them. In consideration of the above-described safety, examples of the sugar include monosaccharides such as glucose, galactose, mannose, fructose, xylose and arabinose. Glucose, fructose, sucrose, kestose, nystose, 1F-fructosyl nystose, stachyose are preferable, and sucrose and glucose are more preferable. Oligosaccharides are manufactured by allowing enzymes such as amylase to act on starch, sucrose, or the like. The oligosaccharides include maltooligosaccharide, isomalto-oligosaccharide, fructo-oligosaccharide, galacto-oligosaccharide, and xylo -o ligo saccharide.

The monocarboxylic acid which is used for esterifying all or a part of the OH groups in the monosaccharide or polysaccharide structure is not particularly limited, and known aliphatic monocarboxylic acids, alicyclic monocarboxylic acids, aromatic monocarboxylic acids, and the like can be used. As a carboxylic acid to be used, one kind of carboxylic acid or a mixture of two or more kinds may be used.

Preferable examples of the aliphatic monocarboxylic acids include saturated fatty acids such as an acetic acid, a propionic acid, a butyric acid, an isobutyric acid, a valeric acid, a caproic acid, an enanthic acid, a caprylic acid, a pelargonic acid, a capric acid, a 2-ethyl-hexane carboxylic acid, an undecyl acid, a lauric acid, a tridecylic acid, a myristic acid, a pentadecylic acid, a palmitic acid, a heptadecylic acid, a stearic acid, a nonadecanoic acid, an arachic acid, a behenic acid, a lignoceric acid, a cerotic acid, a heptacosanoic acid, a montanic acid, a melissic acid, and a lacceric acid, unsaturated fatty acids such as an undecylenic acid, an oleic acid, a sorbic acid, a linoleic acid, a linolenic acid, an arachidonic acid, and an octenoic acid, and alicyclic monocarboxylic acids such as a cyclopentanecarboxylic acid, a cyclohexanecarboxylic acid, and a cyclooctanecarboxylic acid.

Preferable examples of the aromatic monocarboxylic acids include aromatic monocarboxylic acids such as a benzoic acid and a toluic acid in which an alkyl group or an alkoxy group is introduced to a benzene ring of a benzoic acid, aromatic monocarboxylic acids such as a cinnamic acid, a benzilic acid, a biphenylcarboxylic acid, a naphthalenecarboxylic acid, and a tetralincarboxylic acid which have two or more benzene rings, and derivatives thereof, and a benzoic acid and a naphtalenecarboxylic acid are particularly preferable.

In this embodiment, an ester derivative of sucrose, more specifically, a benzoic acid ester (MONOPET (registered trademark) SB manufactured by DKS Co. Ltd.) is used.

The ester oligomer is a compound having a repeating unit containing an ester bond of a dicarboxylic acid and a diol, and having such a relatively low molecular weight that about several to 100 repeating units are contained, and is an aliphatic ester oligomer having a molecular weight within a range of from 500 to 10,000. This is because the action of the cellulose acylate as a plasticizer is more reliable than that of an aromatic ester oligomer.

The ester oligomer has a molecular weight within a range of 500 to 10,000. The reason for this is that in a case where the molecular weight is 500 or greater, the flexibility (flexibility) and/or heat sealability of the packaging material 11 for fruits and vegetables are improved as compared to a case where the molecular weight is less than 500, and in a case where the molecular weight is 10,000 or less, the compatibility with the cellulose acylate is secured as compared to a case where the molecular weight is greater than 10,000. The molecular weight of the ester oligomer is preferably within a range of 700 to 5,000, and more preferably within a range of 900 to 3,000.

The molecular weight of the ester oligomer has a molecular weight distribution, and thus it can be obtained by the weight average molecular weight and/or number average molecular weight obtained by gel permeation chromatography (GPC), the number average molecular weight measurement method using terminal functional group amount measurement and/or osmotic pressure measurement, the viscosity average molecular weight obtained by viscosity measurement, or the like. For the ester oligomer in the packaging material according to the present invention, the number average molecular weight measurement method using measurement of a hydroxyl group or an acid group of an ester as a terminal functional group is used.

In the ester oligomer, the dicarboxylic acid preferably has 2 to 10 carbon atoms, and the diol preferably has 2 to 10 carbon atoms. Particularly, both of the dicarboxylic acid and the diol are aliphatic compounds. The reason for this is that using an aliphatic dicarboxylic acid and an aliphatic diol, flexibility can be imparted to the packaging material 11 for fruits and vegetables, and the moisture content is enhanced. Examples of the dicarboxylic acid include aromatic carboxylic acids such as a phthalic acid, a terephthalic acid, and an isophthalic acid, and aliphatic carboxylic acids such as a malonic acid, a succinic acid, a glutaric acid, an adipic acid, a sebacic acid, an azelaic acid, a cyclohexanedicarboxylic acid, a maleic acid, and a fumaric acid. Examples of the aliphatic diol include ethanediol, 1,2-propanediol, 1,3-propanediol, 1,2-butanediol, 1,3-butanediol, 2-methyl-1,3-propanediol, 1,4-butanediol, 1,5-pentanediol, 2,2-dimethyl-1,3-propanediol (neopentyl glycol), 1,4-hexanediol, 1,4-cyclohexanediol, and 1,4-cyclohexanedimethanol. It is also preferable that the terminal hydroxyl group and/or acid group of the ester oligomer be sealed with a monocarboxylic acid or a monoalcohol. Among these, an oligomer having an ester of an adipic acid and an ethylene glycol as a repeating unit, an oligomer having an ester of a succinic acid and an ethylene glycol as a repeating unit, and an oligomer having an ester of a terephthalic acid and an ethylene glycol and an ester of a phthalic acid and an ethylene glycol as a repeating unit are preferable.

The mass of an ester derivative of a monosaccharide is represented by M1, the mass of an ester derivative of a polysaccharide is represented by M2, the mass of an ester oligomer is represented by M3, and the sum of masses (hereinafter, referred to as mass sum) obtained by M1+M2+M3 is represented by MP. In a case where the packaging material 11 for fruits and vegetables contains at least one of an ester derivative of a monosaccharide, an ester derivative of a polysaccharide, or an ester oligomer, the mass sum MP is preferably within a range of 5 to 30 under the assumption that the mass of the cellulose acylate is 100. In a case where the mass sum MP is 5 or greater, the packaging material 11 for fruits and vegetables has better flexibility and/or the film-like packaging material 11 for fruits and vegetables obtained by the packaging material manufacturing machine 10 is more easily formed than in a case where the mass sum MP is less than 5. In a case where the mass sum MP is 30 or less, the packaging material 11 for fruits and vegetables has a more preferable moisture content than in a case where the mass sum MP is greater than 30.

The packaging material 11 for fruits and vegetables may contain, as an additive, an ultraviolet absorber or fine particles serving as a so-called matting agent for preventing sticking between packaging materials 11 for fruits and vegetables, in addition to the plasticizer, as long as these are confirmed to be safe as described above. By adjusting the kind and the amount of the additive, the moisture content of the packaging material 11 for fruits and vegetables can be adjusted, and as a result, the internal humidity is adjusted during packaging of fruits and vegetables with the packaging material 11 for fruits and vegetables, and thus drying of the fruits and vegetables is suppressed.

The acrylic polymer (acrylic resin) functions as an adjuster for the moisture content and/or flexibility of the packaging material 11 for fruits and vegetables. As the acrylic polymer, for example, methyl acrylate, methyl methacrylate, and copolymers thereof with an acrylic acid or a methacrylic acid are preferable. In a case where the packaging material 11 for fruits and vegetables contains an acrylic polymer, the mass of the acrylic polymer is preferably within a range of 10 to 300 under the assumption that the mass of the cellulose acylate is 100.

The safety of esters of sugars, ester oligomers, and acrylic polymers are described in the following literatures. That is, regarding esters of sugars, descriptions are provided in Journal of Synthetic Organic Chemistry, Vol. 21 (1963) No. 1, pages 19 to 27, catalog of Dai-ichi Kogyo Seiyaku Co., Ltd., JP2011-237764A, and the like. In the catalog of Dai-ichi Kogyo Seiyaku Co., Ltd., fatty acid esters and benzoic acid esters of sugars are described. Regarding ester oligomers, descriptions including suppression of movement of an ester oligomer, as an additive for vinyl chloride, to the vinyl chloride are provided in the website of the Vinyl Environmental Council, documents of the Japan Plasticizer Industry Association, and the like. In addition, descriptions including blending with cellulose triacetate are provided in JP2009-173740A. Regarding acrylic polymers, descriptions are provided in JP2003-012859A and JP2011-154360A. The safety includes not only the safety of the substances itself described above, but also the safety of the decomposition products of the substances.

The thickness of the packaging material 11 for fruits and vegetables is preferably within a range of 10 µm to 150 µm. The moisture content of the packaging material 11 for fruits and vegetables can be adjusted by adjusting the thickness, and as a result, the internal humidity is adjusted during packaging of fruits and vegetables with the packaging material 11 for fruits and vegetables, and thus drying of the fruits and vegetables is suppressed. By increasing the thickness, the packaging material can also be used for a packaging bag for fruits and vegetables having a larger size. The thickness of the packaging material 11 for fruits and vegetables is more preferably within a range of 15 µm to 130 µm, and even more preferably within a range of 20 µm to 110 µm.

Fruits and vegetables maintain physiological actions such as moisture release and/or respiration. Accordingly, in a case where the packaging material 11 for fruits and vegetables is used, it is possible to securely suppress condensation caused by moisture contained in the packaging material 11 for fruits and vegetables and/or obtain the effect of adjusting the humidity inside a packaging bag for fruits and vegetables. Examples of such fruits and vegetables include flower vegetables such as broccoli and nabana, leafy vegetables such as spinach and komatsuna, fruit vegetables such as bell peppers, eggplants, tomatoes, cucumbers, strawberries, and edamames, fruits such as bananas, grapes, apples, pears, and mandarins, root vegetables such as Chinese yam and burdock, mushrooms such as shiitake mushrooms and shimeji mushrooms, and cut flowers such as chrysanthemums and lilies. Among these, flower vegetables, leafy vegetables, fruit vegetables, mushrooms, and cut flowers are particularly preferably packaged using the packaging material 11 for fruits and vegetables since the above fruits and vegetables release a large amount of moisture, and thus condensation is shown during long-term storage and distribution in refrigeration.

In the packaging material 11 for fruits and vegetables, condensation and discoloration are suppressed during room temperature storage, and condensation and/or discoloration are prevented during refrigeration, and thus long-term storage is possible. Since condensation is suppressed, mold is also suppressed. Room temperature storage refers to storage within a range of 10°C to 30°C, and refrigerated storage refers to storage within a range of 0°C to 10°C. Since the packaging material 11 for fruits and vegetables can sufficiently prevent condensation during refrigeration, more favorable effects can be obtained in refrigerated storage.

In order to maintain the freshness of fruits and vegetables, refrigerated storage is preferably performed, and the temperature during storage is preferably within a range of 0°C to 10°C. In general, air is cooled by a heat exchanger in refrigerated storage. However, in that case, the moisture in the air is removed in the heat exchanger, and the humidity in the refrigerator is likely to decrease. The amount of saturated water vapor in the air at the refrigerated storage temperature is smaller than that at room temperature. Accordingly, condensation occurs in a case where humidification and/or packaging of fruits and vegetables are performed during refrigerated storage. In a case where a conventional packaging material or a packaging material for modified atmosphere (MA) packaging using fine pores is used in refrigerated storage, the packaging material has low moisture permeability, and thus condensation easily occurs inside the packaging material due to the moisture released from fruits and vegetables. The occurrence of the condensation leads to, for example, the generation and growth of mold, the suppression of respiration of fruits and vegetables due to the condensation on the surfaces of the fruits and vegetables, the deterioration in the MA packaging effect due to blocking of fine pores, and the like. Since the packaging material 11 for fruits and vegetables absorbs and releases moisture according to the change in the humidity inside the packaging material 11 for fruits and vegetables by the equilibrium moisture content, the packaging material for fruits and vegetables prevents condensation and maintains the humidity so as to suppress drying of the fruits and vegetables on the inside of the packaging material 11 for fruits and vegetables. For example, in a packaging material 11 for fruits and vegetables (Example 5) and a commercially available packaging material for MA packaging (Comparative Example 1) to be described later, in a case where the internal humidity inside the packaging material for fruits and vegetables during storage of broccoli, that is, the internal humidity of the packaging bag for fruits and vegetables was measured, the temperature of the refrigeration environment as the environment outside the packaging bag changed within a range of 5°C to 7°C, and the relative humidity changed within a range of 23% RH to 74% RH, whereas the relative humidity in the packaging bag for fruits and vegetables formed using the packaging material 11 for fruits and vegetables changed within a range of 55% RH to 80% RH (the temperature is the same as the temperature of the refrigeration environment described above). On the inside of the commercially available packaging material for MA packaging, the relative humidity changed within a range of 90% RH to 95% RH (the temperature is the same as the temperature of the refrigeration environment described above).

The packaging material manufacturing machine 10 continuously manufactures the packaging material 11 for fruits and vegetables from dope 12 by a solution film forming method. The dope 12 is a cellulose acylate solution in which cellulose acylate having an acyl group substitution degree within the above range is dissolved in a solvent. In this embodiment, a mixture of dichloromethane and methanol is used as a solvent, but the solvent is not limited thereto. The above-described various additives may be contained in the dope 12, and the dope 12 according to this embodiment contains a plasticizer and a matting agent.

The packaging material manufacturing machine 10 includes a casting unit 15, a roller dryer 16, and a winder 17 in this order from the upstream side. The casting unit 15 includes a belt 21 formed into an annular shape, a pair of rollers 22 for moving the belt 21 in a longitudinal direction while supporting the belt by a peripheral surface, a blowing machine 23, a casting die 24, and a peeling roller 25. At least one of the pair of rollers 22 is rotated in a circumferential direction, and due to this rotation, the wound belt 21 is continuously moved in the longitudinal direction. In this example, the casting die 24 is disposed above one of the pair of rollers 22, but may be disposed above the belt 21 between one and the other of the pair of rollers 22.

The belt 21 is a support for a casting film 26 to be described later, and has, for example, a length of 55 m to 200 m, a width of 1.5 m to 5.0 m, and a thickness of 1.0 mm to 2.0 mm.

The casting die 24 continuously discharges the supplied dope 12 from an outlet 24a facing the belt 21. By continuously discharging the dope 12 to the moving belt 21, the dope 12 is cast on the belt 21, and a casting film 26 is formed on the belt 21.

The pair of rollers 22 includes a temperature controller (not shown) which adjusts a peripheral surface temperature. The temperature of the casting film 26 is adjusted via the belt 21 by the roller 22 whose peripheral surface temperature is adjusted. In a so-called dry gelation method in which the casting film 26 is heated to promote drying, and is thus solidified (gelled), the peripheral surface temperature of the roller 22 may be within a range of, for example, 15°C to 35°C. In a so-called cooling gelation method in which the casting film 26 is cooled and solidified, the peripheral surface temperature of the roller 22 may be within a range of -15°C to 5°C. In this embodiment, the dry gelation method is employed.

The blowing machine 23 is provided to dry the formed casting film 26. The blowing machine 23 is provided to face the belt 21. The blowing machine 23 dries the casting film 26 by sending a gas to the casting film 26. In this embodiment, the gas to be sent is the air heated to 100°C. However, the temperature is not limited to 100°C, and the gas is also not limited to air. The casting film 26 gels more rapidly by drying with the blowing machine 23. By gelation, the casting film 26 is solidified so as to be handleable.

Regarding so-called beads, which are the dope 12 from the casting die 24 to the belt 21, a reduced pressure chamber (not shown) may be provided on the upstream side in the moving direction of the belt 21. Regarding the reduced pressure chamber, the atmosphere of an area on the upstream side of the discharged dope 12 is sucked, and the pressure of the area is reduced.

After the casting film 26 is solidified on the belt 21 to such an extent as to be handleable in the roller dryer 16, the casting film is peeled from the belt 21 in a state in which the casting film includes a solvent. The peeling roller 25 is provided to peel the casting film 26 continuously from the belt 21. For example, the peeling roller 25 supports a packaging material 11 for fruits and vegetables formed by peeling from the belt 21 from below, and maintains a constant peeling position PP where the casting film 26 is peeled from the belt 21. The peeling method may be any one of a method of pulling the packaging material 11 for fruits and vegetables toward the downstream side or a method of rotating the peeling roller 25 in the circumferential direction.

In the dry gelation method, for example, peeling from the belt 21 is performed while the solvent content of the casting film 26 is within a range of 3 mass% to 100 mass%, and in this embodiment, peeling is performed in a case where the solvent content is 100 mass%. In the cooling gelation method, for example, peeling is preferably performed while the solvent content of the casting film 26 is within a range of 100 mass% to 300 mass%. In this specification, the solvent content (unit: %) is a value on a dry basis, and specifically, is the percentage obtained by {x/(y-x)}×100 where x is the mass of the solvent, and y is the mass of the packaging material 11 for fruits and vegetables for which the solvent content is obtained.

As described above, the casting unit 15 forms the packaging material 11 for fruits and vegetables from the dope 12. By rotating and moving the belt 21, the casting of the dope 12 and the peeling of the casting film 26 are repeatedly performed.

The roller dryer 16 is provided to dry the formed packaging material 11 for fruits and vegetables, and includes a plurality of rollers 33 and an air conditioner (not shown). Each roller 33 supports the packaging material 11 for fruits and vegetables by a peripheral surface. The packaging material 11 for fruits and vegetables is wound around the roller 33 and handled. The air conditioner adjusts the temperature and/or humidity inside the roller dryer 16. In the roller dryer 16, while being supported by the rollers 33 and handled, the packaging material 11 for fruits and vegetables is dried. The winder 17 is provided to wind the packaging material 11 for fruits and vegetables, and the packaging material 11 for fruits and vegetables is wound into a roll by the winder 17. A tenter (not shown) may be provided between the casting unit 15 and the roller dryer 16 to stretch the packaging material 11 for fruits and vegetables in a width direction. A slitter (not shown) may be provided between, for example, the roller dryer 16 and the winder 17 to continuously cut each side portion of the packaging material 11 for fruits and vegetables by the slitter.

Hereinafter, examples of the invention and comparative examples related to the invention will be shown.

### Examples

Examples 1-6, 8, 10, 11, 13 and 14 are according to the present invention, while examples 7, 9 and 12 are not according to the present invention.

A packaging material 11 for fruits and vegetables having a width of 1.5 m was manufactured by a packaging material manufacturing machine 10, and wound to a length of 2,000 m by a winder 17 to obtain Examples 1 to 14 as shown in table 1, wherein examples 1-6, 8, 10, 11, 13 and 14 are according to the present invention, while examples 7, 9 and 12 are not according to the present invention. The composition of a dope 12 is as follows. The following solid component is a solid component constituting the packaging material 11 for fruits and vegetables.

| | |
|---|---|
| First Solid Component | 100 parts by mass |
| Second Solid Component | parts by mass shown in the column "amount" in Table 1 |
| Third Solid Component | 1.3 parts by mass |
| Dichloromethane (first component of solvent) | 635 parts by mass |
| Methanol (second component of solvent) | 125 parts by mass |

The first solid component represents cellulose acylate, and is described as "cellulose acylate" in the column "substance" of "first component" in Table 1. In the cellulose acylate, all acyl groups are acetyl groups, and the viscosity average degree of polymerization is 320. The acyl group substitution degree of the cellulose acylate is shown in the column "acyl group substitution degree" in Table 1.

The second solid component represents A to D shown in the column "substance" of "second component" in Table 1. A is a benzoic acid ester of sucrose (MONOPET (registered trademark) SB manufactured by DKS Co. Ltd.), B is an oligomer having an ester of an adipic acid and an ethylene glycol as a repeating unit (the molecular weight obtained by terminal functional group quantitation is 1,000), C is an oligomer having an ester of a terephthalic acid and an ethylene glycol and an ester of a phthalic acid and an ethylene glycol as a repeating unit (the molecular weight obtained by terminal functional group quantitation is 700), and D is an acrylic polymer. A, B, and C are plasticizers for cellulose acylate. The third solid component represents silica particles R972 manufactured by NIPPON AEROSIL CO., LTD.

The dope 12 was prepared by the following method. First, a first solid component, a second solid component, and a solvent which was a mixture of dichloromethane and methanol were put into a sealed container, and stirred in the sealed container in a state in which the temperature was maintained at 40°C to dissolve the first solid component and the second solid component in the solvent. A third solid component was dispersed in a mixture of dichloromethane and methanol, and the obtained dispersion was put into and dispersed in the sealed container containing the solution in which the first solid component and the second solid component were dissolved. The dope 12 obtained in this manner was left, and then filtered using filter paper in a state in which the temperature was maintained at 30°C. After that, the filtrate was subjected to a defoaming treatment, and then subjected to casting in the packaging material manufacturing machine 10.

The dope 12 at 30°C was cast from a casting die 24 to form a casting film 26. A blowing machine 23 applied air at 100°C to the casting film 26 immediately after the formation, and the dried casting film 26 was peeled from a belt 21 by a peeling roller 25. The temperature of the belt 21 at a peeling position PP was 10°C. The casting film 26 was peeled after 120 seconds after the formation of the casting film. The solvent content of the casting film 26 at the peeling position PP was 100% by mass. Peeling was performed with a tension of 150 N/m. This tension is a force per 1 m width of the casting film 26. The formed packaging material 11 for fruits and vegetables was guided to a roller dryer 16, and dried while being handled in a state in which a tension was applied in a longitudinal direction by a plurality of rollers 33. The tension applied in the longitudinal direction was 100 N/m. This tension is a force per 1 m width of the packaging material 11 for fruits and vegetables. The roller dryer 16 has a first zone on the upstream side and a second zone on the downstream side. The first zone was set at 80°C, and the second zone was set at 120°C. The packaging material 11 for fruits and vegetables was handled for 5 minutes in the first zone, and handled for 10 minutes in the second zone. The solvent content of the packaging material 11 for fruits and vegetables wound by the winder 17 was 0.3 mass%. The thickness of the obtained packaging material 11 for fruits and vegetables is shown in the column "thickness" in Table 1.

Regarding the obtained packaging material 11 for fruits and vegetables, a first equilibrium moisture content W1, a second equilibrium moisture content W2, and an equilibrium moisture content difference WD were obtained by the above-described method. The moisture permeability was evaluated based on Japanese Industrial Standards JIS Z-0208. The moisture permeability was evaluated at 25°C and 55% RH and at 40°C and 90% RH, respectively. The first equilibrium moisture content W1, the second equilibrium moisture content W2, the equilibrium moisture content difference WD, and the moisture permeability are shown in Table 1.

The obtained packaging material 11 for fruits and vegetables was subjected to sealing packaging for broccoli to evaluate condensation and discoloration of broccoli. A reduction in weight of broccoli, heat sealability, and deformation and wrinkles of the packaging bag for fruits and vegetables were also evaluated. Regarding the packaging material 11 for fruits and vegetables obtained in Examples 1, 2, and 5, suppression of mold was evaluated. First, the packaging material 11 for fruits and vegetables was cut into a rectangular sheet shape having a size of 440 mm×300 mm, and a packaging bag for fruits and vegetables having a size of 220 mm×300 mm was prepared by the above-described method. 200 g of fresh broccoli was put into the packaging bag for fruits and vegetables, and an edge portion of the remaining open side was closed with an adhesive tape to perform sealing packaging. In a case where the adhesion was not performed by heat sealing, all three sides were closed with an adhesive tape. The packaging bag for fruits and vegetables which was sealed while containing broccoli was left in a refrigerator for 14 days. During 14 days, the temperature in the refrigerator changed within a range of 5°C to 7°C, and the relative humidity changed within a range of 23% RH to 74% RH. The method and criteria for each evaluation are as follows. The evaluation results are shown in Table 1.

### 1. Condensation

After the leaving for 14 days, the packaging bag for fruits and vegetables was taken out of the refrigerator, and the degree of condensation in the packaging bag for fruits and vegetables was visually observed. The evaluation criteria are as follows. A and B are acceptable levels, and C represents an unacceptable level. The evaluation results are shown in the column "condensation" in Table 1.
A: Condensation is not confirmed.
B: Condensation is not confirmed, but slight fogging occurs.
C: Water droplets are confirmed.

### 2. Discoloration of Broccoli

The degree of discoloration was evaluated by visually observing flower buds of the broccoli and a stem cut after the leaving. The evaluation criteria are as follows. A and B are acceptable levels, and C represents an unacceptable level. The evaluation results are shown in the column "discoloration" in Table 1.
A: The color has not changed since packaging.
B: Slight discoloration is confirmed. However, the flower buds are only slightly yellowish, and the stem cut is also only slightly discolored.
C: The flower buds are yellowish, and the stem cut is brown.

### 3. Reduction in Weight of Broccoli

The mass of the broccoli after the leaving was measured. The measured value is represented by MB (unit: g). Based on the mass (200 g) of broccoli before packaging with the packaging bag for fruits and vegetables, the ratio of the reduced mass was calculated as a percentage by the formula of {(200-MB)/200}×100. The obtained results are shown in the column "reduction in weight" in Table 1.

### 4. Heat Sealability

The ease of adhesion and the degree of adhesive power in heat sealing in the production of the packaging bag for fruits and vegetables from the packaging material 11 for fruits and vegetables were evaluated as "heat sealability" according to the following criteria. 5, 4, and 3 represent acceptable levels, and 2 and 1 represent unacceptable levels. The evaluation results are shown in the column "heat sealability" in Table 1.
5: The adhesion is performed by heat sealing. The sealing portion which is an adhesion portion has sufficient adhesive power and is not peeled in a case where fruits and vegetables are put into and taken out of the packaging bag as usual. The sealing portion is not peeled even in a case where it is pulled slightly strongly.
4: The adhesion is performed by heat sealing. The sealing portion has sufficient adhesive power and is not peeled in a case where fruits and vegetables are put into and taken out of the packaging bag as usual. However, the sealing portion is peeled in a case where it is pulled slightly strongly.
3: The adhesion is performed by heat sealing. The sealing portion has adhesive power in a case where fruits and vegetables are carefully put into and taken out of the packaging bag, whereby the sealing portion can be subjected to sealing evaluation.
2: The adhesion is performed by heat sealing. However, the sealing portion is frequently peeled in a case where fruits and vegetables are put into and taken out of the packaging bag, whereby the sealing portion cannot be subjected to sealing evaluation.
1: The adhesion is not performed by heat sealing.

### 5. Deformation and Wrinkles of Packaging Bag for Fruits and Vegetables

After the leaving for 14 days, the packaging bag for fruits and vegetables was taken out of the refrigerator, and deformation and wrinkles appearing as the deformation progressed in the packaging bag for fruits and vegetables were evaluated according to the following criteria. 5, 4, and 3 represent acceptable levels, and 2 and 1 represent unacceptable levels. The evaluation results are shown in the column "deformation and wrinkles" in Table 1.
5: No deformation is confirmed in the packaging bag for fruits and vegetables.
4: Slight deformation is confirmed in a part of the packaging bag for fruits and vegetables.
3: Deformation and wrinkles are confirmed in a part of the packaging bag for fruits and vegetables, but there is no problem in practical use.
2: Deformation and wrinkles are confirmed in the whole packaging bag for fruits and vegetables.
1: Severe deformation and wrinkles are both confirmed in the whole packaging bag for fruits and vegetables.

### 6. Suppression of Mold

A: The generation of mold is not confirmed when being observed visually.
B: The generation of mold is confirmed when being observed visually.

**[Table 1]**

| | First Component | | Second Component | | Thickness (µm) | First Equilibrium Moisture Content W1 (%) | Second Equilibrium Moisture Content W2 (%) | Equilibrium Moisture Content Difference (%) | Moisture Permeability | | Condensation | Discoloration | Reduction in Weight (%) | Heat Sealability | Deformation and Wrinkles | Mold |
|---|---|---|---|---|---|---|---|---|---|---|---|---|---|---|---|---|
| | Substance | Acyl Group Substitution Degree | Substance | Amount (parts by mass) | | | | | 25°C, 55% RH (g/m²·day) | 40°C, 90% RH (g/m²·day) | | | | | | |
| Example 1 | Cellulose Acylate | 2.86 | A | 8 | 40 | 3.9 | 1.7 | 2.2 | 284 | 820 | A | B | 28 | 4 | 5 | A |
| Example 2 | Cellulose Acylate | 2.86 | B | 15 | 40 | 3.5 | 1.5 | 2.0 | 190 | 873 | A | A | 20 | 4 | 5 | A |
| Example 3 | Cellulose Acylate | 2.86 | B | 15 | 80 | 3.3 | 1.5 | 1.8 | 102 | 610 | A | A | 13 | 4 | 5 | - |
| Example 4 | Cellulose Acylate | 2.86 | B | 15 | 25 | 2.8 | 1.6 | 1.2 | 304 | 1020 | A | A | 25 | 4 | 5 | - |
| Example 5 | Cellulose Acylate | 2.86 | B | 25 | 35 | 2.8 | 1.2 | 1.6 | 197 | 1033 | A | A | 20 | 5 | 5 | A |
| Example 6 | Cellulose Acylate | 2.86 | B | 25 | 110 | 2.8 | 1.2 | 1.6 | 50 | 410 | A | A | 5 | 5 | 5 | - |
| Example 7 | Cellulose Acylate | 2.40 | C | 20 | 40 | 4.8 | 2.2 | 2.6 | 210 | 1020 | A | A | 27 | 5 | 4 | - |
| Example 8 | Cellulose Acylate | 2.86 | B | 2 | 110 | 4.8 | 2.8 | 2.0 | 190 | 751 | A | A | 18 | 3 | 5 | - |
| Example 9 | Cellulose Acylate | 2.40 | B | 2 | 110 | 7.1 | 4.0 | 3.2 | 250 | 910 | A | A | 20 | 3 | 4 | - |
| Example 10 | Cellulose Acylate | 2.86 | D | 300 | 40 | 1.7 | 1.2 | 0.5 | 70 | 430 | B | B | 10 | 3 | 5 | - |
| Example 11 | Cellulose Acylate | 2.95 | B | 15 | 40 | 3.3 | 1.4 | 0.9 | 150 | 770 | A | A | 15 | 5 | 5 | - |
| Example 12 | Cellulose Acylate | 200 | B | 15 | 40 | 5.8 | 2.8 | 3.0 | 330 | 1100 | A | A | 30 | 3 | 3 | - |
| Example 13 | Cellulose Acylate | 2.70 | B | 15 | 40 | 3.9 | 1.8 | 2.1 | 250 | 950 | A | A | 25 | 4 | 5 | - |
| Example 14 | Cellulose Acylate | 2.97 | B | 2 | 110 | 4.0 | 2.2 | 1.8 | 175 | 690 | A | A | 17 | 3 | 5 | - |
| Comparative Example 1 | P-PLUS | | | | 40 | 1.3 | 0.8 | 0.5 | 2 | 10 | C | C | 0.3 | - | 5 | B |
| Comparative Example 2 | SPASH | | | | 25 | 0.0 | 0.0 | 0.0 | 0 | 0 | C | C | 0.2 | - | 5 | B |
| Comparative Example 3 | F & G Film | | | | 25 | 0.0 | 0.0 | 0.0 | 0 | 0 | B | C | 0.1 | - | 5 | - |
| Comparative Example 4 | Ordinary Cellophane | | | | 30 | 14.3 | 9.4 | 4.9 | 130 | 4030 | A | B | 50 | 2 | 1 | - |
| Comparative Example 5 | Cellulose Acylate | 1.00 | B | 15 | 40 | 8.6 | 4.5 | 4.1 | 520 | 1700 | A | B | 40 | 2 | 2 | - |
| Comparative Example 6 | - | | | | - | - | - | - | - | - | - | B | 70 | - | - | - |

### [Comparative Example 1] to Comparative Example 6]

In Comparative Example 1, P-PLUS (registered trademark) (with zipper, size: M, 295 mm×220 mm, thickness: 40 µm) manufactured by Sumitomo Bakelite Co., Ltd. was used as a packaging bag for fruits and vegetables. In Comparative Example 2, SPASH (registered trademark) manufactured by Mitsui Chemicals Tohcello. Inc. (without chuck, size: 200 mm×300 mm, thickness: 25 µm, with punch hole) was used. In Comparative Example 2, a packaging bag for fruits and vegetables containing broccoli was left in a refrigerator in a state in which one side of the packaging bag for fruits and vegetables was opened. In Comparative Example 3, an F & G (registered trademark) anti-fog film No. 11 (size: 200 mm×300 mm, thickness: 20 µm) manufactured by Toyobo Co., Ltd. was used. In Comparative Example 3, a packaging bag for fruits and vegetables containing broccoli was left in a refrigerator in a state in which one side of the packaging bag for fruits and vegetables was sealed with an adhesive tape. In Comparative Example 4, ordinary Cellophane PL#500 manufactured by Futamura Chemical Co., Ltd. was used, and in Comparative Example 5, a packaging bag with a size of 220 mm×300 mm obtained using cellulose acylate shown in Table 1 was used. In Comparative Example 6, broccoli was left in a refrigerator in a state in which no packaging bag for fruits and vegetables was used, that is, in an unpackaged state. Other conditions are the same as those in the examples.

In Comparative Examples 1 to 6, the evaluation was performed in the same manner as in the examples. In Comparative Examples 1 and 2, suppression of mold was also evaluated in the same manner as in Examples 1, 2, and 5. The evaluation results are shown in Table 1. Since no packaging bag for fruits and vegetables is used in Comparative Example 6, "-" is shown in the columns "first component", "second component", "thickness", "first equilibrium moisture content W1", "second equilibrium moisture content W2", "equilibrium moisture content difference WD", and "moisture permeability" in Table 1.

### Explanation of References

10: packaging material manufacturing machine
11: packaging material for fruits and vegetables
12: dope
15: casting unit
16: roller dryer
17: winder
21: belt
22: roller
23: blowing machine
24: casting die
24a: outlet
25: peeling roller
26: casting film
33: roller

## Claims

1. A packaging material for fruits and vegetables comprising:
cellulose acylate, and
at least one of an acrylic polymer, an ester oligomer, an ester derivative of a monosaccharide, or an ester derivative selected from an ester derivative of lactose, sucrose, nystose, 1F-fructosyl nystose, stachyose, maltitol, lactitol, lactulose, cellobiose, maltose, cellotriose, maltotriose, raffinose, kestose, gentiobiose, gentiotriose, gentiotetraose, xylotriose, galactosyl sucrose, maltooligosaccharide, isomalto-oligosaccharide, fructo-oligosaccharide, galacto-oligosaccharide, and xylo-oligosaccharide,
wherein the cellulose acylate has an acyl group substitution degree within a range of 2.70 to 2.97, and
wherein the ester oligomer is an aliphatic ester oligomer having a molecular weight within a range of from 500 to 10,000.

2. The packaging material for fruits and vegetables according to claim 1,
wherein the cellulose acylate has an acetyl group.

3. The packaging material for fruits and vegetables according to claim 1 or 2,
wherein the sum of masses of the ester oligomer, the ester derivative of a monosaccharide, and the ester derivative selected from an ester derivative of lactose, sucrose, nystose, 1F-fructosyl nystose, stachyose, maltitol, lactitol, lactulose, cellobiose, maltose, cellotriose, maltotriose, raffinose, kestose, gentiobiose, gentiotriose, gentiotetraose, xylotriose, galactosyl sucrose, maltooligosaccharide, isomalto-oligosaccharide, fructo-oligosaccharide, galacto-oligosaccharide, and xylo-oligosaccharide is within a range of 5 to 30 under the assumption that the mass of the cellulose acylate is 100.

## Patentansprüche

1. Verpackungsmaterial für Obst und Gemüse, umfassend:
Celluloseacylat und
zumindest eines von einem Acrylpolymer, einem Ester-Oligomer, einem Esterderivat eines Monosaccharids oder einem Esterderivat, ausgewählt aus einem Esterderivat von Lactose, Sucrose, Nystose, 1F-Fructosylnystose, Stachyose, Maltitol, Lactitol, Lactulose, Cellobiose, Maltose, Cellotriose, Maltotriose, Raffinose, Kestose, Gentiobiose, Gentiotriose, Gentiotetraose, Xylotriose, Galactosylsucrose, Maltooligosaccharid, Isomalto-Oligosaccharid, Fructo-Oligosaccharid, Galacto-Oligosaccharid und Xylo-Oligosaccharid,
worin das Celluloseacylat einen Acylgruppen-Substitutionsgrad im Bereich von 2,70 bis 2,97 aufweist und
worin das Ester-Oligomer ein aliphatisches Ester-Oligomer mit einem Molekulargewicht von 500 bis 10.000 ist.

2. Verpackungsmaterial für Obst und Gemüse gemäß Anspruch 1,
worin das Celluloseacylat eine Acetylgruppe aufweist.

3. Verpackungsmaterial für Obst und Gemüse gemäß Anspruch 1 oder 2,
worin die Summe der Massen des Ester-Oligomers, des Esterderivats eines Monosaccharids und des Esterderivats, das ausgewählt ist aus einem Esterderivat von Lactose, Sucrose, Nystose, 1F-Fructosylnystose, Stachyose, Maltitol, Lactitol, Lactulose, Cellobiose, Maltose, Cellotriose, Maltotriose, Raffinose, Kestose, Gentiobiose, Gentiotriose, Gentiotetraose, Xylotriose, Galactosylsucrose, Maltooligosaccharid, Isomalto-Oligosaccharid, Fructo-Oligosaccharid, Galacto-Oligosaccharid und Xylo-Oligosaccharid, innerhalb des Bereichs von 5 bis 30 liegt, angenommen, dass die Masse von Celluloseacylat 100 beträgt.

## Revendications

1. Matériau d'emballage pour fruits et légumes, comprenant :
un acylate de cellulose, et
au moins un polymère acrylique, un oligomère d'ester, un dérivé ester d'un monosaccharide ou un dérivé ester sélectionné parmi un dérivé ester de lactose, de saccharose, de nystose, de 1F-fructosyl nystose, de stachyose, de maltitol, de lactitol, de lactulose, de cellobiose, de maltose, de cellotriose, de maltotriose, de raffinose, de kestose, de gentiobiose, de gentiotriose, de gentiotétraose, de xylotriose, de galactosyl sucrose, de maltooligosaccharide, d'isomalto-oligosaccharide, de fructo-oligosaccharide, de galacto-oligosaccharide et de xylo-oligosaccharide,
dans lequel l'acylate de cellulose présente un degré de substitution de groupe acyle compris à l'intérieur d'une plage de 2,70 à 2,97, et
dans lequel l'oligomère d'ester est un oligomère d'ester aliphatique présentant un poids moléculaire compris à l'intérieur d'une plage de 500 à 10 000.

2. Matériau d'emballage pour fruits et légumes selon la revendication 1,
dans lequel l'acylate de cellulose présente un groupe acétyle.

3. Matériau d'emballage pour fruits et légumes selon la revendication 1 ou la revendication 2,
dans lequel la somme des masses de l'oligomère d'ester, du dérivé ester d'un monosaccharide et du dérivé ester sélectionné parmi un dérivé ester de lactose, de saccharose, de nystose, de 1F-fructosyl nystose, de stachyose, de maltitol, de lactitol, de lactulose, de cellobiose, de maltose, de cellotriose, de maltotriose, de raffinose, de kestose, de gentiobiose, de gentiotriose, de gentiotétraose, de xylotriose, de galactosyl sucrose, de maltooligosaccharide, d'isomalto-oligosaccharide, de fructo-oligosaccharide, de galacto-oligosaccharide et de xylo-oligosaccharide est comprise à l'intérieur d'une plage de 5 à 30 dans l'hypothèse où la masse de l'acylate de cellulose est de 100.
